# EUROPEAN PATENT SPECIFICATION

(11) **EP 3 147 587 B1**
(45) Date of publication and mention of the grant of the patent: **21.03.2018**
(21) Application number: 15868656.8
(22) Date of filing: 27.07.2015
(51) Int. Cl.: F25B 1/00, F24F 11/02, F25B 49/02

(54) **AIR CONDITIONING DEVICE**
KLIMATIERUNGSVORRICHTUNG
DISPOSITIF DE CLIMATISATION

(43) Date of publication of application: 29.03.2017
(73) Proprietor: MITSUBISHI ELECTRIC CORPORATION, Chiyoda-ku Tokyo 100-8310 (JP)
(72) Inventor: UEHARA, Nobuaki, Tokyo 100-8310 (JP)
(74) Representative: Pfenning, Meinig & Partner mbB
(86) International application number: PCT/JP2015/071273
(87) International publication number: WO 2017/017767

(56) References cited:
- EP-A2- 2 434 233
- JP-A- 2007 263 383
- JP-A- 2014 190 632
- JP-A- 2014 240 714
- JP-A- 2015 087 065
- US-A1- 2009 071 177
- US-A1- 2009 165 482
- US-A1- 2009 260 380

## Description

### Technical Field

The present invention relates to an air-conditioning apparatus configured to reduce a variation of a discharge temperature of a compressor under a low-load control condition.

### Background Art

Hitherto, in an air-conditioning apparatus, there is known a technology which is used for preventing a thermo OFF due to excessive overloading of air-conditioning capacity by determining the upper limit of an operation frequency of a compressor based on a set temperature and a blowing temperature when the blowing temperature is controlled (e.g., refer to Patent Literature 1).

In the air-conditioning apparatus described in Patent Literature 1, an opening degree of an expansion valve is decreased when, during cooling operation, the blowing temperature is lower than a set indoor temperature and the operation frequency of the compressor reaches an instructed lower limit value of the operation frequency set in advance. With this, the blowing temperature is adjusted by changing the opening degree of the expansion valve to be smaller to suppress the air-conditioning capacity reliably when the air-conditioning capacity cannot be suppressed only with the operation frequency of the compressor.

US 2009/0260380 A1 is directed to a refrigeration system. A refrigerant circuit includes, in order to perform a vapor compression supercritical refrigeration cycle, a compression mechanism, an outdoor heat exchanger, an expansion mechanism, and an indoor heat exchanger. The expansion mechanism includes, for the two-stage expansion of refrigerant in the refrigerant circuit, a first throttle mechanism variable in the amount of throttling and a second throttle mechanism variable in the amount of throttling. In the cooling operation mode, there is derived a target value for the pressure of high pressure refrigerant in the refrigerant circuit, from the temperature of refrigerant at the outlet of the outdoor heat exchanger and the temperature of air at the inlet of the outdoor heat exchanger. In the heating operation mode, there is derived a target value for the pressure of high pressure refrigerant in the refrigerant circuit, from the temperature of refrigerant at the outlet of the indoor heat exchanger and the temperature of air at the inlet of the indoor heat exchanger. The amount of throttling of either the first throttle mechanism or the second throttle mechanism is adjusted so that the high pressure refrigerant pressure becomes the target value. US 2009/0260380 A1 discloses an air-conditioning apparatus according to the preamble of claim 1.

US 2009/0071177 A1 is directed to a refrigerant air conditioner. In a refrigerant air conditioner having circularly connected a compressor, a room heat exchanger, a first pressure reducing device, and an outdoor heat exchanger, for supplying hot heat from the room heat exchanger, the refrigerant air conditioner includes a first internal heat exchanger for exchanging heat of refrigerant between the room heat exchanger and the first pressure reducing device with heat of refrigerant between the outdoor heat exchanger and the compressor; an injection circuit for bypassing part of the refrigerant between the room heat exchanger and the first pressure reducing device so as to inject it into a compression chamber within the compressor; a pressure reducing device for injection provided along the injection circuit; and a second internal heat exchanger for exchanging heat of refrigerant reduced in pressure by the pressure reducing device for injection with heat of the refrigerant between the room heat exchanger and the first pressure reducing device.

### Citation List

### Patent Literature

Patent Literature 1: Japanese Unexamined Patent Application Publication No. 2010-249452

### Summary of Invention

### Technical Problem

In the air-conditioning apparatus described in Patent Literature 1, in order to reduce the frequency of thermo OFF due to excessive overloading of air-conditioning capacity relative to an air-conditioning load, the air-conditioning capacity is reduced by changing the target value of the degree of superheat at an outlet of an indoor heat exchanger to reduce the opening degree of the expansion valve. However, the degree of superheat at the outlet of the indoor heat exchanger is controlled to be changed to be higher with one expansion valve, and hence the variation of the discharge temperature of the compressor with respect to the change in opening degree of the expansion valve is large, resulting in a problem such as an excessive rise in discharge temperature and hunting of the compressor.

The present invention has been made to solve the above-mentioned problem, and it is an object of the present invention to provide an air-conditioning apparatus configured to reduce an excessive air-conditioning capacity while at the same time suppressing the excessive rise in discharge temperature or hunting of the compressor by reducing the variation of the discharge temperature of the compressor with respect to the change in opening degree of the expansion valve.

### Solution to Problem

According to the present invention, there is provided an air-conditioning apparatus according to claim 1.

### Advantageous Effects of Invention

The air-conditioning apparatus according to the present invention is configured to adjust the opening degree of the first expansion valve such that the degree of superheat at the outlet of the indoor heat exchanger reaches the target degree of superheat, and adjust the discharge temperature of the compressor with the second expansion valve. Thus, it is possible to reduce the opening degrees of the first expansion valve and the second expansion valve for different purposes. Because of this, the variation of the discharge temperature of the compressor with respect to the changes in opening degree of the first expansion valve and the second expansion valve is reduced. Therefore, it is possible to reduce the air-conditioning capacity while at the same time suppressing the excessive rise in discharge temperature or hunting of the compressor.

### Brief Description of Drawings

[Fig. 1] Fig. 1 is a diagram for illustrating an overall configuration of an air-conditioning apparatus according to Embodiment 1 of the present invention.
[Fig. 2] Fig. 2 is a diagram for illustrating a control flow of a first expansion valve according to Embodiment 1 of the present invention.
[Fig. 3] Fig. 3 is a diagram for illustrating a control flow of a second expansion valve according to Embodiment 1 of the present invention.

### Description of Embodiments

Now, an embodiment of the present invention is described with reference to the drawings.

Note that, in the following drawings, components denoted by the same reference symbols correspond to the same or equivalent components. This is common throughout the description herein.

In addition, the forms of the components described herein are merely examples, and the components are not limited to the description herein.

### Embodiment 1

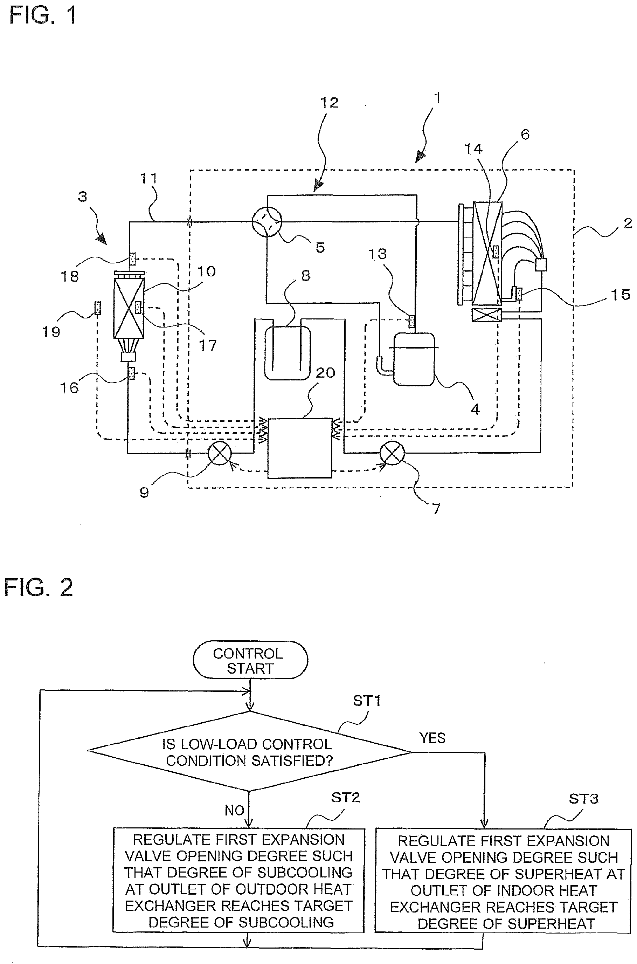

Fig. 1 is a diagram for illustrating an overall configuration of an air-conditioning apparatus 1 according to Embodiment 1 of the present invention.

The air-conditioning apparatus 1 includes an outdoor unit 2 and an indoor unit 3. The air-conditioning apparatus 1 includes a refrigerant circuit 12 configured to connect, by refrigerant pipes 11, a compressor 4, a four-way valve 5, an outdoor heat exchanger 6, a first expansion valve 7, a refrigerant container 8, a second expansion valve 9, and an indoor heat exchanger 10 in this order in cooling operation.

The outdoor unit 2 includes the compressor 4, the four-way valve 5, the outdoor heat exchanger 6, the first expansion valve 7, the refrigerant container 8, and the second expansion valve 9 as its constituent equipment.

The compressor 4 includes, for example, a capacity-controllable inverter compressor, and is configured to suck a low-temperature and low-pressure gas refrigerant and compress the gas refrigerant into a state of a high-temperature and high-pressure gas refrigerant followed by discharge thereof.

The four-way valve 5 is a flow switching valve configured to switch the flow direction of refrigerant.

The outdoor heat exchanger 6 includes, for example, a plate-fin heat exchanger, and is configured to exchange heat between refrigerant and outdoor air. A capillary tube for reducing pressure is connected to an outlet of the outdoor heat exchanger 6.

The first expansion valve 7 is a valve configured to reduce pressure of refrigerant, and is an electronic expansion valve whose opening degree is adjustable.

The refrigerant container 8 is a surplus-refrigerant storing container that is arranged between the first expansion valve 7 and the second expansion valve 9, and is configured to store surplus refrigerant.

The second expansion valve 9 is a valve configured to reduce pressure of refrigerant, and is an electronic expansion valve whose opening degree is adjustable.

Further, a temperature sensor 13 configured to detect a temperature of an outlet of the compressor 4, a temperature sensor 14 configured to detect a temperature of a midpoint of a pipe forming the outdoor heat exchanger 6, and a temperature sensor 15 configured to detect a temperature of the outlet of the outdoor heat exchanger 6 are arranged in the outdoor unit 2.

The indoor unit 3 includes the indoor heat exchanger 10 as its constituent equipment.

The indoor heat exchanger 10 includes, for example, a plate-fin heat exchanger, and is configured to exchange heat between refrigerant and indoor air.

Further, a temperature sensor 16 configured to detect a temperature of an inlet of the indoor heat exchanger 10, a temperature sensor 17 configured to detect a temperature of a midpoint of a pipe forming the indoor heat exchanger 10, a temperature sensor 18 configured to detect a temperature of an outlet of the indoor heat exchanger 10, and a temperature sensor 19 configured to detect a temperature of indoor air flowing into the indoor heat exchanger 10 are arranged in the indoor unit 3.

The refrigerant pipes 11 connecting the refrigerant circuit 12 of the air-conditioning apparatus 1 is filled with refrigerant, for example, R410A, which is HFC refrigerant, to thereby form a refrigeration cycle.

Further, an air-sending device (not shown) configured to send outdoor air is arranged in the vicinity of the outdoor heat exchanger 6 and an air-sending device (not shown) configured to send indoor air is arranged in the vicinity of the indoor heat exchanger 10.

The air-conditioning apparatus 1 includes a controller 20 in the outdoor unit 2, which is responsible for control of the air-conditioning apparatus 1 such as driving of actuators including the first expansion valve 7, the second expansion valve 9, the compressor 4, the four-way valve 5, and the air-sending device. Detection signals of the various temperature sensors 13 to 19 described above are input to the controller 20.

The controller 20 includes, for example, a microcomputer or a digital signal processor (DSP) and others.

The controller 20 corresponds to an expansion valve control unit of the present invention.

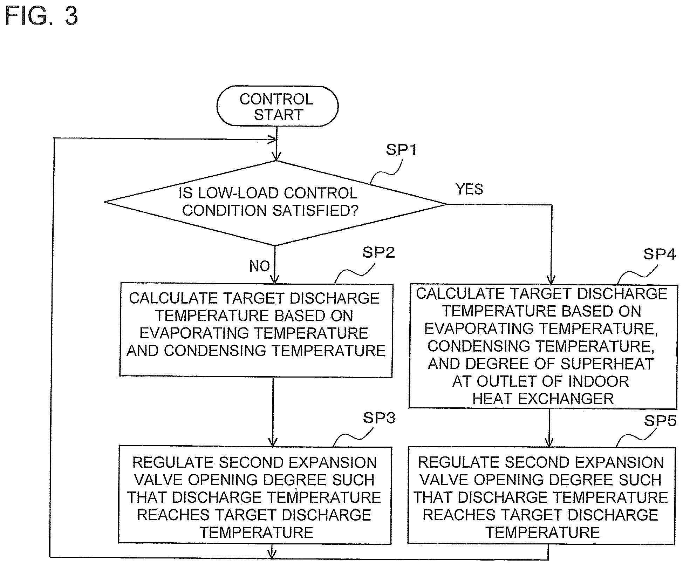

The controller 20 is configured to acquire necessary temperatures from the various temperature sensors 13 to 19, and adjust the opening degrees of the first expansion valve 7 and the second expansion valve 9 based on those acquired values. Thus, the controller 20 stores programs corresponding to flowcharts of Fig. 2 and Fig. 3.

Next, an operation example at the time of the cooling operation of the air-conditioning apparatus 1 is described. When the passage of the four-way valve 5 is switched to a passage for the cooling operation by the controller 20, the refrigerant is compressed by the compressor 4 to become a high-temperature and high-pressure gas refrigerant, and the high-temperature and high-pressure gas refrigerant flows into the outdoor heat exchanger 6 via the four-way valve 5. The high-temperature and high-pressure gas refrigerant that has flowed into the outdoor heat exchanger 6 exchanges heat with outdoor air passing through the outdoor heat exchanger 6, and the heat is transferred to the outside. Then, this refrigerant becomes a high-pressure liquid refrigerant and flows out of the outdoor heat exchanger 6. The high-pressure liquid refrigerant that has flowed out of the outdoor heat exchanger 6 has its pressure reduced by the first expansion valve 7 and the second expansion valve 9 to become a low-pressure two-phase gas-liquid refrigerant, and flows into the indoor heat exchanger 10. The two-phase gas-liquid refrigerant that has flowed into the indoor heat exchanger 10 exchanges heat with the indoor air passing through the indoor heat exchanger 10, cools the indoor air to become a low-temperature and low-pressure gas refrigerant, and is then sucked into the compressor 4.

Next, an operation example at the time of the heating operation of the air-conditioning apparatus 1 is described. When the passage of the four-way valve 5 is switched to a passage for the heating operation by the controller 20, the refrigerant is compressed by the compressor 4 to become a high-temperature and high-pressure gas refrigerant in the same manner as described above, and the high-temperature and high-pressure gas refrigerant flows into the indoor heat exchanger 10 via the four-way valve 5. The high-temperature and high-pressure gas refrigerant that has flowed into the indoor heat exchanger 10 exchanges heat with the indoor air passing through the indoor heat exchanger 10, heats the indoor air, and then becomes a high-pressure liquid refrigerant. The high-pressure liquid refrigerant that has flowed out of the indoor heat exchanger 10 has its pressure reduced by the second expansion valve 9 and the first expansion valve 7 to become a low-pressure two-phase gas-liquid refrigerant, and flows into the outdoor heat exchanger 6. The low-pressure two-phase gas-liquid refrigerant that has flowed into the outdoor heat exchanger 6 exchanges heat with the outdoor air passing through the outdoor heat exchanger 6 to become a low-temperature and low-pressure gas refrigerant, and is then sucked into the compressor 4.

Fig. 2 is a diagram for illustrating a control flow of the first expansion valve 7 according to Embodiment 1 of the present invention. Fig. 3 is a diagram for illustrating a control flow of the second expansion valve 9 according to Embodiment 1 of the present invention.

Now, a description is given of control of the first expansion valve 7 and the second expansion valve 9 of the air-conditioning apparatus 1 based on Fig. 2 and Fig. 3.

In Step ST1 and Step SP1 illustrated in Fig. 2 and Fig. 3, respectively, the controller 20 determines whether a low-load control condition is satisfied, that is, whether, in cooling operation, a difference between an indoor suction temperature and a set indoor temperature is equal to or less than a temperature reference value and the operation frequency of the compressor 4 is equal to or less than a frequency reference value.

The indoor suction temperature is a temperature detected by the temperature sensor 19 configured to detect the temperature of indoor air flowing into the indoor heat exchanger 10.

In this step, the controller 20 determines that a normal control condition is satisfied when, in cooling operation, the difference between the indoor suction temperature and the set indoor temperature is larger than the temperature reference value or the operation frequency of the compressor 4 is larger than the frequency reference value, that is, when NO is determined in Step ST1 and Step SP1. When NO is determined in Step ST1 and Step SP1 in which the normal control condition is satisfied, the processing advances to Step ST2 and Step SP2.

Further, the controller 20 determines that the low-load control condition is satisfied when, in cooling operation, the difference between the indoor suction temperature and the set indoor temperature is equal to or less than the temperature reference value and the operation frequency of the compressor 4 is equal to or less than the frequency reference value, that is, when YES is determined in Step ST1 and Step SP1. When YES is determined in Step ST1 and Step SP1 in which the low-load control condition is satisfied, the processing advances to Step ST3 and Step SP4.

As illustrated in Fig. 2, in Step ST2 in which the normal control condition is satisfied, the controller 20 adjusts the opening degree of the first expansion valve 7 such that the degree of subcooling at the outlet of the outdoor heat exchanger 6 reaches a target degree of subcooling.

The degree of subcooling at the outlet of the outdoor heat exchanger 6 in this step is calculated by subtracting a temperature detected by the temperature sensor 15 configured to detect the temperature of the outlet of the outdoor heat exchanger 6 from a temperature detected by the temperature sensor 14 configured to detect the temperature of the midpoint of the pipe forming the outdoor heat exchanger 6.

After the processing of Step ST2, the processing returns to Step ST1.

As illustrated in Fig. 3, in Step SP2 in which the normal control condition is satisfied, the controller 20 calculates a target discharge temperature for the discharge temperature of the compressor 4 based on an evaporating temperature, a condensing temperature, and characteristics data on the compressor 4, with a suction superheat degree of the compressor 4 being set higher than 0 degrees C and equal to or less than 5 degrees C.

Further, the evaporating temperature is a temperature detected by the temperature sensor 17 configured to detect the temperature of the midpoint of the pipe forming the indoor heat exchanger 10. The condensing temperature is a temperature detected by the temperature sensor 14 configured to detect the temperature of the midpoint of the pipe forming the outdoor heat exchanger 6.

As illustrated in Fig. 3, in Step SP3 following Step SP2, the controller 20 adjusts the opening degree of the second expansion valve 9 such that the discharge temperature of the compressor 4 reaches the target discharge temperature calculated in Step SP2.

The discharge temperature of the compressor 4 is a temperature detected by the temperature sensor 13 configured to detect the temperature of the outlet of the compressor 4.

After the processing of Step SP3, the processing returns to Step SP1.

On the other hand, as illustrated in Fig. 2, in Step ST3 in which the low-load control condition is satisfied, the controller 20 adjusts the opening degree of the first expansion valve 7 such that the degree of superheat at the outlet of the indoor heat exchanger 10 reaches a target degree of superheat higher than that in the normal control condition. Because of this, the target degree of superheat for the degree of superheat at the outlet of the indoor heat exchanger 10 is set to be higher than that in the normal control condition, for example, to 20 degrees C or such a temperature, and the opening degree of the first expansion valve 7 becomes smaller than that in the normal control condition.

The degree of superheat at the outlet of the indoor heat exchanger 10 in this step is calculated by subtracting a temperature detected by the temperature sensor 16 configured to detect the temperature of the inlet of the indoor heat exchanger 10 from a temperature detected by the temperature sensor 18 configured to detect the temperature of the outlet of the indoor heat exchanger 10.

After the processing of Step ST3, the processing returns to Step ST1.

Further, as illustrated in Fig. 3, in Step SP4 in which the low-load control condition is satisfied, the controller 20 calculates the target discharge temperature for the discharge temperature of the compressor 4 based on the evaporating temperature, the condensing temperature, the degree of superheat at the outlet of the indoor heat exchanger 10, and the characteristics data on the compressor 4.

The degree of superheat at the outlet of the indoor heat exchanger 10 is, for example, 20 degrees C or such a temperature, and this degree of superheat is assumed to be equal to the suction superheat degree of the compressor 4 and the suction superheat degree of the compressor 4 is replaced with the degree of superheat at the outlet of the indoor heat exchanger 10 for the use of calculation. Because of this, the target discharge temperature for the discharge temperature of the compressor 4 is calculated to be higher than that in the normal control condition, and the opening degree of the second expansion valve 9 becomes smaller than that in the normal control condition.

Further, the evaporating temperature is a temperature detected by the temperature sensor 17 configured to detect the temperature of the midpoint of the pipe forming the indoor heat exchanger 10. The condensing temperature is a temperature detected by the temperature sensor 14 configured to detect the temperature of the midpoint of the pipe forming the outdoor heat exchanger 6. The degree of superheat at the outlet of the indoor heat exchanger 10 is calculated by subtracting a temperature detected by the temperature sensor 16 configured to detect the temperature of the inlet of the indoor heat exchanger 10 from a temperature detected by the temperature sensor 18 configured to detect the temperature of the outlet of the indoor heat exchanger 10.

As illustrated in Fig. 3, in Step SP5 following Step SP4, the controller 20 adjusts the opening degree of the second expansion valve 9 such that the discharge temperature of the compressor 4 reaches the target discharge temperature calculated in Step SP4.

After the processing of Step SP5, the processing returns to Step SP1.

Note that, in this description, control of the first expansion valve 7 and control of the second expansion valve 9 are illustrated as separate flows as illustrated in Fig. 2 and Fig. 3, but the controller 20 executes those control in parallel.

In the air-conditioning apparatus 1 according to Embodiment 1, when, in cooling operation, the air-conditioning load is small, that is, when the low-load control condition is satisfied, the target degree of superheat for the degree of superheat at the outlet of the indoor heat exchanger 10 is set higher and the opening degree of the first expansion valve 7 is set smaller. With this, the refrigerant circulating amount decreases in the refrigerant circuit 12 of the air-conditioning apparatus 1, to thereby be able to reduce the air-conditioning capacity.

Further, when, in cooling operation, the air-conditioning load is small, that is when the low-load control condition is satisfied, the target discharge temperature for the discharge temperature of the compressor 4 that is used to adjust the opening degree of the second expansion valve 9 is calculated by assuming the degree of superheat at the outlet of the indoor heat exchanger 10 to be equal to the suction superheat degree of the compressor 4 and replacing the suction superheat degree of the compressor 4 with the degree of superheat at the outlet of the indoor heat exchanger 10. Because of this, the target discharge temperature for the discharge temperature of the compressor 4 is set to be higher than that in the normal control condition, and the opening degree of the second expansion valve 9 is set smaller. Thus, the opening degree of the second expansion valve 9 is prevented from being reduced along with the reduction in opening degree of the first expansion valve 7, to thereby be able to prevent cancellation of an effect of reducing the air-conditioning capacity.

Further, through control of the discharge temperature of the compressor 4 in the second expansion valve 9, the target discharge temperature for the discharge temperature of the compressor 4 is higher than that in the normal control condition, and the discharge temperature of the compressor 4 is stabilized with a value higher than that in the normal control condition. With this, it is possible to prevent an excessive rise in discharge temperature or hunting of the compressor 4 when the opening degrees of the first expansion valve 7 and the second expansion valve 9 are reduced.

With the air-conditioning apparatus 1 according to Embodiment 1, for example when the air-conditioning apparatus 1 is used for a purpose requiring a long operation period such as cooling a machine, it is possible to reduce the frequency of thermo OFF, which stops the compressor 4, even when the air-conditioning load is small, to thereby be able to prolong the lifetime of the compressor 4.

According to Embodiment 1 described above, the controller 20 is configured to, under the low-load control condition in which the difference between the indoor suction temperature and the set indoor temperature is equal to or less than the temperature reference value and the operation frequency of the compressor 4 is equal to or less than the frequency reference value, adjust the opening degree of the first expansion valve 7 such that the degree of superheat at the outlet of the indoor heat exchanger 10 reaches the target degree of superheat, and adjust the opening degree of the second expansion valve 9 such that the discharge temperature of the compressor 4 reaches the target discharge temperature. With this configuration, it is possible to reduce the opening degrees of the first expansion valve 7 and the second expansion valve 9 for different purposes under the low-load control condition. Through control of the discharge temperature of the compressor 4 in the second expansion valve 9, the target discharge temperature for the discharge temperature of the compressor 4 is higher than that in the normal control condition, and the discharge temperature of the compressor 4 is stabilized with a value higher than that in the normal control condition. Because of this, the variation of the discharge temperature of the compressor 4 with respect to the changes in opening degree of the first expansion valve 7 and the second expansion valve 9 is reduced. Thus, it is possible to reduce the air-conditioning capacity while at the same time suppressing the excessive rise in discharge temperature or hunting of the compressor 4.

The controller 20 is configured to, under the low-load control condition in which the difference between the indoor suction temperature and the set indoor temperature is equal to or less than the temperature reference value and the operation frequency of the compressor 4 is equal to or less than the frequency reference value, adjust the opening degrees of the first expansion valve 7 and the second expansion valve 9 such that those opening degrees are smaller than those in the normal control condition, respectively. With this configuration, it is possible to reduce the opening degrees of the first expansion valve 7 and the second expansion valve 9 for different purposes under the low-load control condition.

The controller 20 is configured to, under the low-load control condition in which the difference between the indoor suction temperature and the set indoor temperature is equal to or less than the temperature reference value and the operation frequency of the compressor 4 is equal to or less than the frequency reference value, adjust the opening degree of the first expansion valve 7 such that the degree of superheat at the outlet of the indoor heat exchanger 10 reaches the target degree of superheat higher than that in the normal control condition, and adjust the opening degree of the second expansion valve 9 such that the discharge temperature of the compressor 4 reaches the target discharge temperature higher than that in the normal control condition. With this configuration, it is possible to reduce the opening degrees of the first expansion valve 7 and the second expansion valve 9 for different purposes under the low-load control condition.

The controller 20 is configured to, under the low-load control condition in which the difference between the indoor suction temperature and the set indoor temperature is equal to or less than the temperature reference value and the operation frequency of the compressor 4 is equal to or less than the frequency reference value, adjust the opening degree of the first expansion valve 7 such that the degree of superheat at the outlet of the indoor heat exchanger 10 reaches the target degree of superheat higher than that in the normal control condition, and adjust the opening degree of the second expansion valve 9 such that the discharge temperature of the compressor 4 is higher than the target discharge temperature higher than that in the normal control condition, the target discharge temperature being calculated by assuming the degree of superheat at the outlet of the indoor heat exchanger 10 to be equal to the suction superheat degree of the compressor 4 and replacing the suction superheat degree of the compressor 4 with the degree of superheat at the outlet of the indoor heat exchanger 10. With this configuration, it is possible to reduce the opening degrees of the first expansion valve 7 and the second expansion valve 9 for different purposes under the low-load control condition. Through control of the discharge temperature of the compressor 4 in the second expansion valve 9, the target discharge temperature for the discharge temperature of the compressor 4 is higher than that in the normal control condition, and the discharge temperature of the compressor 4 is stabilized with a value higher than that in the normal control condition. Because of this, the variation of the discharge temperature of the compressor 4 with respect to the changes in opening degree of the first expansion valve 7 and the second expansion valve 9 is reduced. Thus, it is possible to reduce the air-conditioning capacity while at the same time suppressing the excessive rise in discharge temperature or hunting of the compressor 4.

The controller 20 is configured to, under the normal control condition in which the difference between the indoor suction temperature and the set indoor temperature is larger than the temperature reference value or the operation frequency of the compressor 4 is larger than the frequency reference value, adjust the opening degree of the first expansion valve 7 such that the degree of subcooling at the outlet of the outdoor heat exchanger 6 reaches the target degree of subcooling, and adjust the opening degree of the second expansion valve 9 such that the discharge temperature of the compressor 4 reaches the target discharge temperature, the target discharge temperature being calculated with the suction superheat degree of the compressor 4 being set higher than 0 degrees C and equal to or lower than 5 degrees C. With this configuration, it is possible to appropriately control the first expansion valve 7 and the second expansion valve 9 under the normal control condition.

Note that, in Embodiment 1, a description has been given of an air-conditioning apparatus capable of performing both the cooling operation and heating operation. However, the present invention relates to control in the cooling operation, and thus can also be applied to an air-conditioning apparatus configured to perform only the cooling operation.

### Reference Signs List

1 air-conditioning apparatus 2 outdoor unit 3 indoor unit 4 compressor 5 four-way valve 6 outdoor heat exchanger 7 first expansion valve 8 refrigerant container 9 second expansion valve 10 indoor heat exchanger 11 refrigerant pipe 12 refrigerant circuit 13, 14, 15, 16, 17, 18, 19 temperature sensor 20 controller

## Claims

1. An air-conditioning apparatus (1), comprising:
a compressor (4), an outdoor heat exchanger (6), a first expansion valve (7), a refrigerant container (8), a second expansion valve (9), and an indoor heat exchanger (10) sequentially connected by refrigerant pipes (11) in a refrigerant circuit (12); and
an expansion valve control unit (20) configured to regulate an opening degree of the first expansion valve (7) and an opening degree of the second expansion valve (9); and
a temperature sensor (16) configured to detect a temperature of an inlet of the indoor heat exchanger (10), a temperature sensor (18) configured to detect a temperature of an outlet of the indoor heat exchanger (10), and a temperature sensor (19) configured to detect a temperature of indoor air flowing into the indoor heat exchanger (10), wherein the degree of superheat at the outlet of the indoor heat exchanger (10) is calculated by subtracting the temperature of the inlet of the indoor heat exchanger (10) from the temperature of the outlet of the indoor heat exchanger (10), **characterized in that** the compressor (4) includes a capacity-controllable inverter compressor, **in that** the air-conditioning apparatus (1) comprises a temperature sensor (13) configured to detect a discharge temperature of an outlet of the compressor (4), and **in that** the expansion valve control unit (20) is configured to, when a difference between an indoor suction temperature and a set indoor temperature is equal to or less than a temperature reference value and an operation frequency of the compressor (4) is equal to or less than a frequency reference value, regulate the opening degree of the first expansion valve (7) such that a degree of superheat at an outlet of the indoor heat exchanger (10) reaches a target degree of superheat, and regulate the opening degree of the second expansion valve (9) such that a discharge temperature of the compressor (4) reaches a target discharge temperature.

2. The air-conditioning apparatus (1) of claim 1, wherein the expansion valve control unit (20) is configured to, when the difference between the indoor suction temperature and the set indoor temperature is equal to or less than the temperature reference value and the operation frequency of the compressor (4) is equal to or less than the frequency reference value, regulate the opening degree of the first expansion valve (7) such that the opening degree of the first expansion valve (7) is smaller than the opening degree of the first expansion valve (7) in a normal condition in which the difference between the indoor suction temperature and the set indoor temperature is larger than the temperature reference value or the operation frequency of the compressor (4) is larger than the frequency reference value, and regulate the opening degree of the second expansion valve (9) such that the opening degree of the second expansion valve (9) is smaller than the opening degree of the second expansion valve (9) in the normal condition.

3. The air-conditioning apparatus (1) of claim 1 or 2, wherein the expansion valve control unit (20) is configured to, when the difference between the indoor suction temperature and the set indoor temperature is equal to or less than the temperature reference value and the operation frequency of the compressor (4) is equal to or less than the frequency reference value, regulate the opening degree of the first expansion valve (7) such that the degree of superheat at the outlet of the indoor heat exchanger (10) reaches the target degree of superheat higher than the degree of superheat at the outlet of the indoor heat exchanger (10) in a normal condition in which the difference between the indoor suction temperature and the set indoor temperature is larger than the temperature reference value or the operation frequency of the compressor (4) is larger than the frequency reference value, and regulate the opening degree of the second expansion valve (9) such that the discharge temperature of the compressor (4) reaches the target discharge temperature higher than the discharge temperature in the normal condition.

4. The air-conditioning apparatus (1) of claim 1 or 2, wherein the expansion valve control unit (20) is configured to, when the difference between the indoor suction temperature and the set indoor temperature is equal to or less than the temperature reference value and the operation frequency of the compressor (4) is equal to or less than the frequency reference value, regulate the opening degree of the first expansion valve (7) such that the degree of superheat at the outlet of the indoor heat exchanger (10) reaches the target degree of superheat higher than the degree of superheat at the outlet of the indoor heat exchanger (10) in a normal condition in which the difference between the indoor suction temperature and the set indoor temperature is larger than the temperature reference value or the operation frequency of the compressor (4) is larger than the frequency reference value, and regulate the opening degree of the second expansion valve (9) such that the discharge temperature of the compressor (4) reaches the target discharge temperature higher than the discharge temperature in the normal condition, the target discharge temperature being calculated by assuming the degree of superheat at the outlet of the indoor heat exchanger (10) to be equal to a suction superheat degree of the compressor (4) and replacing the suction superheat degree of the compressor (4) with the degree of superheat at the outlet of the indoor heat exchanger (10).

5. The air-conditioning apparatus (1) of claim 4, wherein the expansion valve control unit (20) is configured to, when the difference between the indoor suction temperature and the set indoor temperature is larger than the temperature reference value or the operation frequency of the compressor (4) is larger than the frequency reference value, regulate the opening degree of the first expansion valve (7) such that a degree of subcooling at the outlet of the outdoor heat exchanger (6) reaches a target degree of subcooling, and regulate the opening degree of the second expansion valve (9) such that the discharge temperature of the compressor (4) reaches the target discharge temperature, the target discharge temperature being calculated with the suction superheat degree of the compressor (4) being set higher than 0 degrees C and equal to or lower than 5 degrees C.

## Patentansprüche

1. Klimaanlage (1), umfassend:
einen Verdichter (4), einen Außenwärmetauscher (6), ein erstes Expansionsventil (7), einen Kältemittelbehälter (8), ein zweites Expansionsventil (9) und einen Innenwärmetauscher (10), die durch Kältemittelrohre (11) in einem Kältemittelkreislauf (12) sequenziell verbunden sind; und
eine Expansionsventilsteuereinheit (20), die eingerichtet ist, einen Öffnungsgrad des ersten Expansionsventils (7) und einen Öffnungsgrad des zweiten Expansionsventils (9) zu regeln; und
einen Temperatursensor (16), der eingerichtet ist, eine Temperatur eines Einlasses des Innenwärmetauschers (10) zu erfassen, einen Temperatursensor (18), der eingerichtet ist, eine Temperatur eines Auslasses des Innenwärmetauschers (10) zu erfassen, und einen Temperatursensor (19), der eingerichtet ist, eine Temperatur von Innenluft, die in den Innenwärmetauscher (10) einströmt, zu erfassen, wobei der Überhitzungswärmegrad am Auslass des Innenwärmetauschers (10) durch Subtrahieren der Temperatur des Einlasses des Innenwärmetauschers (10) von der Temperatur des Auslasses des Innenwärmetauschers (10) berechnet wird,
**dadurch gekennzeichnet, dass** der Verdichter (4) einen Inverter-Verdichter mit steuerbarer Kapazität enthält, dass die Klimaanlage (1) einen Temperatursensor (13) umfasst, der eingerichtet ist, eine Ablasstemperatur eines Auslasses des Verdichters (4) zu erfassen, und dass die Expansionsventilsteuereinheit (20) eingerichtet ist, wenn eine Differenz zwischen einer Innenansaugtemperatur und einer gesetzten Innentemperatur gleich ist wie oder geringer ist als ein Temperaturreferenzwert und eine Betriebsfrequenz des Verdichters (4) gleich ist wie oder geringer ist als ein Frequenzreferenzwert, den Öffnungsgrad des ersten Expansionsventils (7) derart zu regeln, dass ein Überhitzungswärmegrad an einem Auslass des Innenwärmetauschers (10) einen Zielüberhitzungswärmegrad erreicht, und den Öffnungsgrad des zweiten Expansionsventils (9) derart zu regeln, dass eine Ablasstemperatur des Verdichters (4) eine Zielablasstemperatur erreicht.

2. Klimaanlage (1) nach Anspruch 1, wobei die Expansionsventilsteuereinheit (20) eingerichtet ist, wenn die Differenz zwischen der Innenansaugtemperatur und der gesetzten Innentemperatur gleich ist wie oder geringer ist als der Temperaturreferenzwert und die Betriebsfrequenz des Verdichters (4) gleich ist wie oder geringer ist als der Frequenzreferenzwert, den Öffnungsgrad des ersten Expansionsventils (6) derart zu regeln, dass der Öffnungsgrad des ersten Expansionsventils (7) kleiner ist als der Öffnungsgrad des ersten Expansionsventils (7) in einem normalen Zustand, in welchem die Differenz zwischen der Innenansaugtemperatur und der gesetzten Innentemperatur größer ist als der Temperaturreferenzwert oder die Betriebsfrequenz des Verdichters (4) größer ist als der Frequenzreferenzwert, und den Öffnungsgrad des zweiten Expansionsventils (9) derart zu regeln, dass der Öffnungsgrad des zweiten Expansionsventils (9) kleiner ist als der Öffnungsgrad des zweiten Expansionsventils (9) im normalen Zustand.

3. Klimaanlage (1) nach Anspruch 1 oder 2, wobei die Expansionsventilsteuereinheit (20) eingerichtet ist, wenn die Differenz zwischen der Innenansaugtemperatur und der gesetzten Innentemperatur gleich ist wie oder geringer ist als der Temperaturreferenzwert und die Betriebsfrequenz des Verdichters (4) gleich ist wie oder geringer ist als der Frequenzreferenzwert, den Öffnungsgrad des ersten Expansionsventils (7) derart zu regeln, dass der Überhitzungswärmegrad am Auslass des Innenwärmetauschers (10) den Zielüberhitzungswärmegrad höher als der Überhitzungswärmegrad am Auslass des Innenwärmetauschers (10) in einem normalen Zustand erreicht, in welchem die Differenz zwischen der Innenansaugtemperatur und der gesetzten Innentemperatur größer ist als der Temperaturreferenzwert oder die Betriebsfrequenz des Verdichters (4) größer ist als der Frequenzreferenzwert, und den Öffnungsgrad des zweiten Expansionsventils (9) derart zu regeln, dass die Ablasstemperatur des Verdichters (4) die Zielablasstemperatur höher als die Ablasstemperatur im normalen Zustand erreicht.

4. Klimaanlage (1) nach Anspruch 1 oder 2, wobei die Expansionsventilsteuereinheit (20) eingerichtet ist, wenn die Differenz zwischen der Innenansaugtemperatur und der gesetzten Innentemperatur gleich ist wie oder geringer ist als der Temperaturreferenzwert und die Betriebsfrequenz des Verdichters (4) gleich ist wie oder geringer ist als der Frequenzreferenzwert, den Öffnungsgrad des ersten Expansionsventils (7) derart zu regeln, dass der Überhitzungswärmegrad am Auslass des Innenwärmetauschers (10) den Zielüberhitzungswärmegrad höher als den Überhitzungswärmegrad am Auslass des Innenwärmetauschers (10) in einem normalen Zustand erreicht, in welchem die Differenz zwischen der Innenansaugtemperatur und der gesetzten Innentemperatur größer ist als der Temperaturreferenzwert oder die Betriebsfrequenz des Verdichters (4) größer ist als der Frequenzreferenzwert, und den Öffnungsgrad des zweiten Expansionsventils (9) derart zu regeln, dass die Ablasstemperatur des Verdichters (4) die Zielablasstemperatur höher als die Ablasstemperatur im normalen Zustand erreicht, wobei die Zielablasstemperatur berechnet wird durch Annahme, dass der Überhitzungswärmegrad am Auslass des Innenwärmetauschers (10) gleich ist wie ein Ansaugüberhitzungswärmegrad des Verdichters (4) und Ersetzen des Ansaugüberhitzungswärmegrades des Verdichters (4) durch den Überhitzungswärmegrad am Auslass des Innenwärmetauschers (10).

5. Klimaanlage (1) nach Anspruch 4, wobei die Expansionsventilsteuereinheit (20) eingerichtet ist, wenn die Differenz zwischen der Innenansaugtemperatur und der gesetzten Innentemperatur größer ist als der Temperaturreferenzwert oder die Betriebsfrequenz des Verdichters (4) größer ist als der Frequenzreferenzwert, den Öffnungsgrad des ersten Expansionsventils (7) derart zu regeln, dass ein Unterkühlungsgrad am Auslass des Außenwärmetauschers (6) einen Unterkühlungszielgrad erreicht, und den Öffnungsgrad des zweiten Expansionsventils (9) derart zu regeln, dass die Ablasstemperatur des Verdichters (4) die Zielablasstemperatur erreicht, wobei die Zielablasstemperatur berechnet wird, bei Einstellen des Ansaugüberhitzungswärmegrades des Verdichters (4) als höher als 0 Grad C und gleich wie oder geringer als 5 Grad C.

## Revendications

1. Appareil de climatisation (1), comprenant :
un compresseur (4), un échangeur de chaleur extérieur (6), une première soupape d'expansion (7), un contenant de fluide frigorigène (8), une seconde soupape d'expansion (9), et un échangeur de chaleur intérieur (10), connectés de manière séquentielle par des canalisations de fluide frigorigène (11) dans un circuit de fluide frigorigène (12) ; et
une unité de commande de soupape d'expansion (20) configurée de façon à réguler le degré d'ouverture de la première soupape d'expansion (7), et le degré d'ouverture de la seconde soupape d'expansion (9) ; et
un détecteur de température (16) configuré de façon à détecter une température d'une entrée de l'échangeur de chaleur intérieur (10), un détecteur de température (18) configuré de façon à détecter une température d'une sortie de l'échangeur de chaleur intérieur (10), et un détecteur de température (19) configuré de façon à détecter une température de l'air intérieur qui circule dans l'échangeur de chaleur intérieur (10), dans lequel le degré de surchauffe au niveau de la sortie de l'échangeur de chaleur intérieur (10) est calculé en soustrayant la température de l'entrée de l'échangeur de chaleur intérieur (10) de la température de la sortie de l'échangeur de chaleur intérieur (10) ;
**caractérisé en ce que** le compresseur (4) inclut un compresseur inverseur dont la puissance peut être régulée, **en ce que** l'appareil de climatisation (1) comprend un détecteur de température (13) configuré de façon à détecter la température de refoulement d'une sortie du compresseur (4), et **en ce que** l'unité de commande de soupape d'expansion (20) est configurée de façon à :
réguler, lorsque une différence entre une température d'aspiration intérieure et une température intérieure fixée est égale ou inférieure à une valeur de référence de la température, et lorsque une fréquence de fonctionnement du compresseur (4) est égale ou inférieure à une valeur de référence de la fréquence, le degré d'ouverture de la première soupape d'expansion (7) de telle sorte que le degré de surchauffe au niveau d'une sortie de l'échangeur de chaleur intérieur (10) atteigne un degré de surchauffe cible ; et
réguler le degré d'ouverture de la seconde soupape d'expansion (9) de telle sorte que la température de refoulement du compresseur (4) atteigne une température de refoulement cible.

2. Appareil de climatisation (1) selon la revendication 1, dans lequel l'unité de commande de soupape d'expansion (20) est configurée de façon à réguler, lorsque la différence entre la température d'aspiration intérieure et la température intérieure fixée est égale ou inférieure à la valeur de référence de la température, et lorsque la fréquence de fonctionnement du compresseur (4) est égale ou inférieure à la valeur de référence de la fréquence, le degré d'ouverture de la première soupape d'expansion (7) de telle sorte que le degré d'ouverture de la première soupape d'expansion (7) soit inférieur au degré d'ouverture de la première soupape d'expansion (7) dans un état normal dans lequel la différence entre la température d'aspiration intérieure et la température intérieure fixée est supérieure à la valeur de référence de la température, ou la fréquence de fonctionnement du compresseur (4) est supérieure à la valeur de référence de la fréquence, et à réguler le degré d'ouverture de la seconde soupape d'expansion (9) de telle sorte que le degré d'ouverture de la seconde soupape d'expansion (9) soit inférieur au degré d'ouverture de la seconde soupape d'expansion (9) dans l'état normal.

3. Appareil de climatisation (1) selon la revendication 1 ou la revendication 2, dans lequel l'unité de commande de soupape d'expansion (20) est configurée de façon à réguler, lorsque la différence entre la température d'aspiration intérieure et la température intérieure fixée est égale ou inférieure à la valeur de référence de la température, et lorsque la fréquence de fonctionnement du compresseur (4) est égale ou inférieure à la valeur de référence de la fréquence, le degré d'ouverture de la première soupape d'expansion (7) de telle sorte que le degré de surchauffe au niveau de la sortie de l'échangeur de chaleur intérieur (10) atteigne le degré de surchauffe cible supérieur au degré de surchauffe au niveau de la sortie de l'échangeur de chaleur intérieur (10) dans un état normal dans lequel la différence entre la température d'aspiration intérieure et la température intérieure fixée est supérieure à la valeur de référence de la température, ou la fréquence de fonctionnement du compresseur (4) est supérieure à la valeur de référence de la fréquence, et à réguler le degré d'ouverture de la seconde soupape d'expansion (9) de telle sorte que la température de refoulement du compresseur (4) atteigne la température de refoulement cible supérieure à la température de refoulement dans l'état normal.

4. Appareil de climatisation (1) selon la revendication 1 ou la revendication 2, dans lequel l'unité de commande de soupape d'expansion (20) est configurée de façon à réguler, lorsque la différence entre la température d'aspiration intérieure et la température intérieure fixée est égale ou inférieure à la valeur de référence de la température, et lorsque la fréquence de fonctionnement du compresseur (4) est égale ou inférieure à la valeur de référence de la fréquence, le degré d'ouverture de la première soupape d'expansion (7) de telle sorte que le degré de surchauffe au niveau de la sortie de l'échangeur de chaleur intérieur (10) atteigne le degré de surchauffe cible supérieur au degré de surchauffe au niveau de la sortie de l'échangeur de chaleur intérieur (10) dans un état normal dans lequel la différence entre la température d'aspiration intérieure et la température intérieure fixée est supérieure à la valeur de référence de la température, ou la fréquence de fonctionnement du compresseur (4) est supérieure à la valeur de référence de la fréquence, et à réguler le degré d'ouverture de la seconde soupape d'expansion (9) de telle sorte que la température de refoulement du compresseur (4) atteigne la température de refoulement cible supérieure à la température de refoulement dans l'état normal, la température de refoulement cible étant calculée en supposant que le degré de surchauffe au niveau de la sortie de l'échangeur de chaleur intérieur (10) soit égal à un degré de surchauffe d'aspiration du compresseur (4), et en remplaçant le degré de surchauffe d'aspiration du compresseur (4) par le degré de surchauffe au niveau de la sortie de l'échangeur de chaleur intérieur (10).

5. Appareil de climatisation (1) selon la revendication 4, dans lequel l'unité de commande de soupape d'expansion (20) est configurée de façon à réguler, lorsque la différence entre la température d'aspiration intérieure et la température intérieure fixée est supérieure à la valeur de référence de la température, ou lorsque la fréquence de fonctionnement du compresseur (4) est supérieure à la valeur de référence de la fréquence, le degré d'ouverture de la première soupape d'expansion (7) de telle sorte que le degré de sous-refroidissement au niveau de la sortie de l'échangeur de chaleur extérieur (6) atteigne un degré de sous-refroidissement cible, et à réguler le degré d'ouverture de la seconde soupape d'expansion (9) de telle sorte que la température de refoulement du compresseur (4) atteigne la température de refoulement cible, la température de refoulement cible étant calculée en fixant le degré de surchauffe d'aspiration du compresseur (4) supérieur à 0 degré Celsius et égal ou inférieur à 5 degrés Celsius.
